# EUROPEAN PATENT SPECIFICATION

(11) **EP 0 681 904 B1**
(45) Date of publication and mention of the grant of the patent: **09.01.2002**
(21) Application number: 95107869.0
(22) Date of filing: 26.09.1989
(51) Int. Cl.: B29C 67/00, G01F 23/28

(54) **Stereolithographic apparatus with means to measure and control the level of fluid**
Stereolithographische Vorrichtung mit Messeinrichtung zum Kontrollieren der Oberfläche des Fluidums
Appareil de stéréolithographie avec moyens pour mesurer et contrôler le niveau de fluide

(30) Priority: 26.09.1988 US 249399; 31.10.1988 US 265039
(43) Date of publication of application: 15.11.1995
(62) Divisional of application: 89309762.6
(73) Proprietor: 3D SYSTEMS, INC., Valencia, California 91355 (US)
(72) Inventor: Almquist, Thomas A., San Gabriel, CA 91775 (US); Hull, Charles W., Santa Clarita, CA 91351 (US); Modrek, Borzo, Montebello, CA 90640 (US); Serkuczewski, Andrzej R., Newhall, CA 91321 (US); Jacobs, Paul F., La Crescenta, CA 91214 (US); Lewis, Charles W., Sherman Oaks, CA 91403 (US); Lewis, Mark A., Valencia, CA 91355 (US); Liran, Abraham, Northridge, CA 91324 (US)
(74) Representative: Hess, Peter K., Dipl.-Phys.

(56) References cited:
- EP-A- 0 014 301
- EP-A- 0 171 069
- FR-A- 2 482 290
- GB-A- 1 083 489
- US-A- 4 247 508
- US-A- 4 247 784
- PATENT ABSTRACTS OF JAPAN vol. 10 no. 301 (M-525) [2357] ,14 October 1986 & JP-A-61 114818 (FUJITSU LTD) 2 June 1986,
- PATENT ABSTRACTS OF JAPAN vol. 11 no. 221 (M-608) [2668] ,17 July 1987 & JP-A-62 037109 (FUJITSU LTD) 18 February 1987,
- PATENT ABSTRACTS OF JAPAN vol. 5 no. 173 (P-87) [845] ,5 November 1981 & JP-A-56 100316 (HIRAKAWA DENKI K.K.) 12 August 1981,
- ADVANCES IN INSTRUMENTATION, vol. 32, no. 4, 1977 RESEARCH TRIANGLE PARK US, pages 151-156, D. TAYLOR 'An economical method of glass level control utilising a laser beam generator and a solid state detector'

## Description

This invention relates to a method for forming a three-dimensional object by stereolithography and a system for forming a three-dimensional object by stereolithography according to the precharacterising part of claim 1 and of claim 7 respectively.

In recent years, "stereolithography" systems, such as those described in U.S. Patent No. 4,575,330 entitled "APPARATUS FOR PRODCTION OF THREE-DIMENSIONAL OBJECTS BY STEREOLITHOGRAPHY" have come into use. Basically, stereolithography is a method for automatically building complex three-dimensional plastic parts from a working fluid being polymerizable or capable of transforming its physical state upon application of a curing media of synergistic stimulation, respectively. Thereby a plurality of thin layers of polymerizable liquid in a preselected pattern are successively cured on top of each other until all of the thin layers are joined together to form a three-dimensional part. Each polymerized layer is in essence a thin cross section of the desired three-dimensional object. With this technology, the parts are literally grown in a vat of liquid plastic by simultaneously measuring the surface level of the working fluid to ensure the sufficiently covering of the object surface by the working fluid. This method of fabrication is extremely powerful for quickly reducing design ideas to physical form and for making prototypes. Moreover, complex parts can be made quickly without tooling. Because the system uses a computer to generate the cross section of patterns, the system can be readily linked to CAD/CAM systems.

Presently preferred polymers are cured by ultraviolet (UV) light and their curing is fast enough to make them practical model building materials. The liquid that is not polymerized when a part is made is still usable and remains in the vat as successive parts are made. An ultraviolet laser generates a small intense spot of UV which is moved across the liquid surface with a galvanometer mirror X-Y scanner in a predetermined pattern. The scanner is driven by computer generated vectors or the like. Precise complex patterns can be rapidly produced with this technique.

The stereolithography system includes a laser scanner, a vat or tank for containing the polymerizable liquid, and an object support platform, which is capable of being raised and lowered in the tank, and a controlling computer. The system is programmed to automatically make a plastic part by forming one thin cross section at a time and building the desired three-dimensional object up layer by layer.

In typical stereolithography procedures, a thin layer of viscous curable plastic liquid is applied to a surface which may be a previously cured layer and, after sufficient time has elapsed for the thin layer of polymerizable liquid to smooth out by gravity, a computer controlled beam of radiation is moved across the thin liquid layer to sufficiently cure the plastic liquid so that subsequent layers can be applied thereto. The waiting period for the thin layer to level varies depending on several factors such as viscosity of the polymerizable liquid, the layer-thickness, and the like.

Typically, the cured layer, which is supported on a vertically movable object support platform, is dipped below the surface of a bath of the viscous polymerizable liquid a distance equal to the desired layer thickness so that the liquid plastic can flow over the cured layer. When the surface levels, the layer is ready for curing by radiation.

For further details of stereolithography, reference is made to U.S. patent 4,575,330 and the following pending U.S. patent applications, including appendices attached thereto or material incorporated therein by reference, as is fully set forth:

U.S. Patent Application No. 5,104,592, method of and apparatus for production of three-dimensional objects by stereo stereolithography with reduced curl, filed April 17, 1989, entitled "METHOD OF AND APPARATUS FOR PRODUCTION OF THREE-DIMENSIONAL OBJECTS BY STEREO LITHOGRAPHY WITH REDUCED CURL";
U.S. Patent Application No. 4,922,093, filed March 31, 1989, entitled "METHOD AND A DEVICE FOR DETERMINING THE NUMBER OF PEOPLE PRESENT IN A DETERMINED SPACE BY PROCESSING THE GREY LEVELS OF POINTS IN AN IMAGE";
U.S. Patent Application No. 5,015,424, filed April 18, 1988, entitled "METHOD AND APPARATUS FOR PRODUCTION OF THREE-DIMENSIONAL OBJECTS BY STEREOLITHOGRAPHY";
U.S. Patent Application No. 4,999,143, filed April 18, 1988, entitled "METHOD AND APPARATUS FOR PRODUCTION OF THREE-DIMENSIONAL OBJECTS BY STEREOLITHOGRAPHY";
U.S. Patent Application No. 5,076,974, filed November 8, 1988, entitled "METHOD FOR CURING PARTIALLY POLYMERIZED PARTS";
U.S. Patent Application No. 5,058,988, filed November 8, 1988 entitled "APPARATUS AND METHOD FOR PROFILING A BEAM";
U.S. Patent Application No. 5,059,021, filed November 8, 1988, entitled "APPARATUS AND METHOD FOR CORRECTING FOR DRIFT IN PRODUCTION OF OBJECTS BY STEREOLITHOGRAPHY";
U.S. Patent Application No. 5,123,734, filed November 8, 1988, entitled "APPARATUS AND METHOD FOR CALIBRATING AND NORMALIZING A STEREOLITHOGRAPHIC APPARATUS";
U.S. Patent Application No. 5,143,663, filed June 12, 1989, entitled "STEREOLITHOGRAPHY METHOD AND APPARATUS"; and
U.S. Patent Application No. 4,892,231, filed October 31, 1988, entitled "PUMP CHAMBER DISPENSER".

What has been needed and heretofore unavailable is a means to reduce the cycle time for forming each layer of plastic. The present invention satisfies that need.

Many scientific experiments and industrial applications require the measurement of the level of a fluid. The term "level of a fluid" as used here means the height of the surface of a fluid in a gravitational field or other accelerated frame of reference. This surface may be the top or even the bottom of the fluid (if the fluid is floating in another fluid). The fluid may be the ocean, the gasoline in the tank of an automobile or a liquid chemical in a test tube, among many possibilities. Various means have been adopted over the years to measure the levels of such fluids, including dip sticks, lines painted on the side of the pilings, marks on the side of test tubes, floats, and the like. A need exists, however, for an apparatus which can very precisely and reliably measure the level of a fluid. Apparatus of this sort is particularly useful in industrial applications and can be coupled with a level maintenance means such as a plunger, a diaphragm or controls for a pump in order to maintain the level of the fluid at any desired height.

In particular, stereolithographic machines require very precise control of the level of a working fluid. U.S. Patent No. 4,575,330 to Charles W. Hull, mentioned earlier, discloses apparatus for production of three dimensional objects by stereolithography. The working fluid used in stereolithographic apparatus is usually a photopolymer liquid curable by the application of ultraviolet (U.V.) light. As noted in U.S. Patent No. 4,575,330, the level of the working fluid in the preferred embodiment must be maintained at a constant level so that the beam of U.V. light will remain sharply in focus on a fixed plane.

The overall intensity and intensity profile ("beam profile") of the beam of U.V. light at the surface of the liquid photopolymer will determine, in cooperation with other factors (such as the characteristics of the liquid photopolymer and the length of time the beam remains in a single spot), the depth and profile of the photopolymer that is cured or polymerized by exposure to the beam. The beam profile will vary with the level of the liquid photopolymer, because the beam is focussed to have a known profile at a predetermined level of the liquid photopolymer. If the liquid photopolymer has a level different from the predetermined one, the difference in the beam profile will change the width of the cured photopolymer and its depth from the depth and width planned.

Furthermore, if the level of the liquid photopolymer is higher than the predetermined level, the depth of the cured photopolymer may not be sufficient to reach to and adhere with the previously cured layer, with detrimental consequences for the structural integrity of the object being formed. If the level is lower, then the new layer will be thinner than planned, which is detrimental to the accuracy of reproduction of the object.

The level of the liquid photopolymer must be maintained despite the shrinkage caused by curing the liquid photopolymer, heating, evaporation, and the like. In early versions of stereolithographic apparatus, this level was maintained by providing a spillway. The level of the liquid photopolymer rose to and slightly above (because of surface tension) the spillway. A spillway, however, does not control the level of the liquid photopolymer with sufficient precision to make possible the finer resolution of parts made by stereolithographic apparatus. According ly , a need exists for a more precise means of measuring the level of a fluid.

From EP-A-0 250 121 a stereolithographic apparatus is known wherein a modulated and deflected beam from a light source impinges on a layer of a liquid resin lying in a particular solidification plane. The liquid resin is located in a container which is typically supported on a container positioning mechanism and associated with a resin supply apparatus and a layer fixing mechanism. Each time a layer is solidified by the deflected light beam, the container positioning mechanism is lowered such that the solidification plane, which is fixed, lies at successively higher locations with respect to the container. Through a feed line connected to the resin supply apparatus an amount of liquid resin is supplied sufficient to provide for a coating on previously solidified layers having the desired layer thickness.

From the US-A-4 247 508 a laser sinter apparatus is known in which fusible particles are employed to form layers. Each particle layer is selectively fused by a laser beam, to fuse an area which defines the respective portion of the article in the layer. After one layer is selectively fused, another layer will be added to the top thereof and selectively fused thereafter, such that the particle will be built up in layers, the fused portion of one layer fusing onto a portion of the prior layer. The apparatus used comprises a container having a bottom which is movable vertically within the walls of the container. An upper window is provided having a thickness which defines the thickness of each layer. Initially, the bottom of the container will be located at the level of the lower edge of the window. An amount of fusable particles will be located in the window on the bottom and then wiped by a wiping member to a thinner layer, level with the top of the window. After the layer has been selectively fused by the laser beam, the bottom is moved downward a distance corresponding to the thickness of the window and a second layer of particles is deposited on the first layer. This process is repeated until the solid article is formed.

From prior art document JP-A-61-114 818 a stereolithographic apparatus is known wherein an optical thermo-setting resin is gradually supplied into a resin container and selectively hardened by a laser beam. The used system comprises a resin container in which a smoothing member is placed, the length of which is equal to either the length or the width of the contained. The smoothing member is horizontally moved across the surface of the liquid resin which has been supplied to the container from a separate resin supply mechanism. The smoothing member has been added in order to reduce the period of time necessary to obtain a flat resin surface. The resin is supplied from the resin supply mechanism for recoating previously cured layers. Due to the high viscosity of the resin, this recoating time is considerable long increasing the production time of the three-dimensional part to be produced.

From documents JP 62-37109, US-A-4 320 394, and EP-A-82 300 566.5 systems are known for detecting the surface level of liquids under various conditions.

The system according to JP 62-37109 relies on a reflection set-up to measure the surface position displacement of a liquid photocuring-type resin layer which has been sequentially supplied to a resin containing vessel. A beam of non-photosetting wavelength light is directed to the surface of the photo polymerizable liquid at an angle, and the reflected light beam is received by a position sensitive detector. If a derivation from a prescribed surface level is detected, a feed-back circuit generates a corrective signal for adjusting the surface level.

However, the beam for measuring the surface level is directed to the surface of the working fluid at the same region where the object is formed. This is detrimental to the accuracy of the measuring process, because for instance bubbles due to trapped air or surface waves due to a relative motion of the object or a blade might cause deviations from an ideal flat surface with well defined optical properties.

European patent application 0 171 069 A2 (which forms the basis for the preamble of independent claims 1 and 7) discloses a method and apparatus for production of three-dimensional objects by stereolithography. The objects are formed layer by layer, by exposing the surface of a fluid medium solidifiable by synergistic stimulation to cross-sectional patterns of said synergistic stimulation. The object is formed on an elevator platform which is moveable perpendicular to the surface of the solidifiable liquid. Once a cross-sectional pattern of the object is solidified, the object is lowered a net amount of one layer thickness by means of the moveable elevator platform and a fresh layer of solidifiable fluid medium is formed on top of the previously solidified layer. After the formation of the fresh layer of fluid material is completed, the layer is exposed to synergistic stimulation in the cross-sectional pattern of the next layer of the object.

According to the system described in the European patent application 0 171 069 A2, it is important to maintain a constant level of the liquid at the working surface since, due to lowering of the elevator platform, fluid medium is displaced, and because solidification is accompanied by a certain degree of shrinking of the medium. As such, EP 0 171 069 A2 discloses a level detection system and feedback networks, which are well known in the art, which can be used to drive a fluid pump or a liquid displacement device, such as a solid rod which is moved out of the fluid medium as the elevator platform is moved further into the fluid medium, to offset changes in fluid volume and maintain constant fluid level at the surface. However, EP 0 171 069 A2 does not suggest any specific arrangement for measuring the surface level.

In view of the above, it is the object of the present invention to provide a method and a system with improved accuracy.

The present invention provides a new and improved stereolithography system for generating a three-dimensional object by forming successive, thin, cross-sectional laminae of that object at the surface of a polymerizable liquid which is cured in response to appropriate radiation stimulation.

The present invention is particularly directed to an improved stereolithography method and system for improved measurement of the surface level of the working fluid.

The present invention provides a stereolithographic method as defined in independent claim 1 and a stereolithographic system as defined in independent claim 7.

Particular embodiments of the invention are the subject of the dependent claims.

The invention provides a method for forming a three-dimensional object by stereolithography, the method comprising containing a body of working fluid said working fluid being polymerizable or capable of transforming its physical state upon application of a curing media or synergistic stimulation, respectively; measuring the surface level of said working fluid; and applying a curing media or synergistic stimulation in a pre-selected pattern to successive layers at said surface of the working fluid to form a three-dimensional object; wherein said curing media or synergistic stimulation is applied to a first region of said surface, which is separated from a second region of said surface by a wall, wherein said first region is in fluid communication with said second region of said surface by means of a passage, and wherein measuring of the surface level of said working fluid is performed at said second region of said surface.

The system according to the present invention comprises a means for containing a working fluid, said working fluid being polymerizable or capable of transforming its physical state upon application of a curing media or synergistic stimulation, respectively; means for measuring the surface level of said working fluid; and means for applying a curing media or synergistic stimulation in a pre-selected pattern to successive layers at said surface of the working fluid to form a three-dimensional object; wherein said system further comprises a wall separating a first region of said surface of the working fluid from a second region of said surface of the working fluid said first region being in fluid communication with said second region by means of a passage, wherein said means for applying a curing media or synergistic stimulation is arranged to apply said curing media or synergistic stimulation to said first region of said surface, and wherein the means for measuring the surface level of said working fluid are arranged to perform said measurement at said second region of said surface.

In accordance with the present invention, a layer of polymerizable liquid is first applied to a surface on an object support platform. Excess polymerizable liquid is struck off the layer of the desired thickness. Curing media such as radiation is directed to the upper or working surface of the smoothed layer in a preselected pattern to thereby sufficiently cure the layer so that subsequent layers can be applied and cured in the same manner to form the desired three-dimensional object.

In a presently preferred embodiment, an object support platform, having a surface on which the layers are applied, is provided and is adapted to be raised and lowered in a bath of the polymerizable liquid in a vat or tank. The platform is lowered into the bath so that a surface thereon, which may be the last-cured layer, is beneath the upper surface of the polymerziable liquid bath a distance generally greater than the desired thickness of the layer. The platform is then raised so that the viscous polymeriziable liquid on the surface is above the upper surface of the bath. A horizontally moving doctor blade strikes off excess polymerizable liquid so that a liquid layer of polymer of the desired thickness is formed. The platform is then lowered so that the upper surface of the smoothed layer of the polymerized liquid is at essentially the same level as the bath. Curing radiation is then directed to the smoothed layer in a graphic pattern thereon to cure the thin liquid layer so that one or more subsequent layer of the polymerizable liquid can be applied thereon. The object support platform with the partially cured solid layer thereon is then lowered further away from the surface of the bath so that polymerizable liquid can flow onto the solid layer and the cycle repeated.

The process continues with the formation of a plurality of successively formed layers with these layers bonded together until the desired three-dimensional object has been formed. The final product of the stereolithography must have sufficient strength for subsequent handling. Usually, the object is given a final cure after forming.

Care should be exercised during the procedures to ensure that the level of polymerizable liquid in the bath is maintained at a constant level, particularly when the leveled layer of polymerizable liquid is lowered into the bath and cured by radiation, because the liquid in the bath in essence forms the boundaries of leveled layers of liquid. In a presently preferred embodiment, the bath level is sensed in a suitable manner, one level compared to the desired level, and in response to any differences therein a piston or plunger in the bath is raised or lowered in the bath to control the level at the desired set point.

The three-dimensional object is formed one horizontal layer at a time by moving a radiation beam such as ultraviolet light from a helium-cadmium laser across the surface of the photon-curable resin, solidifying the liquid where it strikes. Absorption in the resin prevents the laser light from penetrating deeply and allows a thin layer to be formed.

The present invention provides a new and improved apparatus for measuring the level of a fluid, comprising a means for generating a beam of electromagnetic radiation and a sensor that varies an electrical signal in response to changes in the position of the electromagnetic beam impinging on the sensor. The beam sensor is mounted at a distance perpendicular to the level of the fluid. The beam is directed along a first optical path (the term "optical path" is used although the beam need not be of visible light) toward the surface of the fluid, at an angle with respect to the surface of the fluid, so that a detectable portion of the beam is reflected from the surface of the fluid along a second optical path to the sensor. Changes in the level of the fluid will change the point at which the beam impinges on the sensor and will thus cause variations in the electrical signal from the sensor. This signal may be used to control devices which in turn control the level of the fluid, such as pumps, diaphragms, or plungers.

The surface of the fluid is presumed to be flat or to remain at the same angle with respect to the beam even though the height of the surface of the fluid may vary. Accordingly, the angle at which the beam is reflected from the surface of the fluid will not vary. If the surface is not flat, the beam may not be reflected or may reflect at unpredictable angles. If waves or turbulence are expected, then a mirrored float which is weighted to prevent yawing, pitching, and rolling may be placed on the surface of the fluid to reflect the beam.

In a preferred embodiment, the means for generating a beam of electromagnetic radiation is a laser and the sensor is a plurality of linked photocells displaced from the surface of the fluid along a direction perpendicular to the surface of the fluid. The radiation from the laser preferably should not alter the state of the fluid. Electronic circuits are provided to compare the electrical output of each of the photocells and thus detect movements in the position of the beam as it impinges upon the photocells. When the level of the fluid changes, the beam will no longer impinge on the photocells at the same place. One photocell will receive more of the beam than before and another less than before. This will change the electrical output from each of the photocells affected. A comparison circuit will detect this difference and drive either an instrument displaying the level of the fluid or a device for changing the level of the fluid (such as a plunger) or both.

The apparatus for measuring the level of the fluid of the present invention is swift, reliable, and very sensitive. It is capable of very precisely determining the level of the fluid and consequently maintaining that level very precisely. At the present, apparatus for measuring the level of a fluid made according to the invention can measure (and maintain) the level of a fluid to at least within plus or minus 0.0127 mm (0.5 mil) (plus or minus 0.0127 mm (0.0005 inches)).

In sum, the stereolithography method and system of the present invention provides for a considerable reduction in cycle time for each layer formed, improvements in dimensional accuracy, and increases in green strength and final cured strength. Moreover, the level measuring and controlling apparatus of the present invention satisfies a long existing need for a system capable of rapidly, reliably, and accurately measuring the level of a fluid.

The above and other objects and advantages of this invention will be apparent from the following more detailed description when taken in conjunction with the accompanying drawings of illustrative embodiments.

### Brief Description of the Drawings

FIG. 1 is a cross-sectional view of a stereolithography system embodying features of the invention;
FIG. 2 is a perspective view of the system shown in FIG. 1 further illustrating the embodiment shown in FIG. 1;
FIGS. 3-6 are simplified cross-sectional views of the tank shown in FIG. 1 at various stages of the stereolithography procedure;
FIG. 7 is a perspective view of a three-dimensional object which has been made in accordance with the present invention;
FIG. 8 is a perspective view of a portion of a stereolithographic apparatus with a preferred embodiment of the fluid level measuring apparatus of the present invention mounted thereon;
FIG. 9 is a side elevational view of the preferred embodiment of the invention;
FIG. 10 is a side elevational view of the optical paths taken by the laser beam of the preferred embodiment of the invention under conditions of changing fluid level and angle of incidence;
FIG. 11 is a front elevational view of a bi-cell photo sensor used in the preferred embodiment of the invention;
FIG. 12 is a block diagram of the electronics associated with the bi-cell photosensor of the preferred embodiment of the invention;
FIG. 13 illustrates the trapped volume problem;
FIG. 14 illustrates threaded, retractable pins for setting the blade gap;
FIG. 15 provides a close-up view of the pin mounted in the blade;
FIG. 16 illustrates a cross-section of a blade having an angle of attack in the direction of blade movement:
FIGS. 17-19 illustrate alternative cross-sectional shapes for the blade of FIG. 16;
FIG. 20 illustrates an alternative shape for a level-detecting float;
FIG. 21 illustrates a level detecting apparatus including a float;
FIG. 22 is a diagram of the optical detector of the apparatus of FIG. 21; and
FIG. 23 is a flowchart of the recoating software used in the SLA-250.

### Detailed Description of the Invention

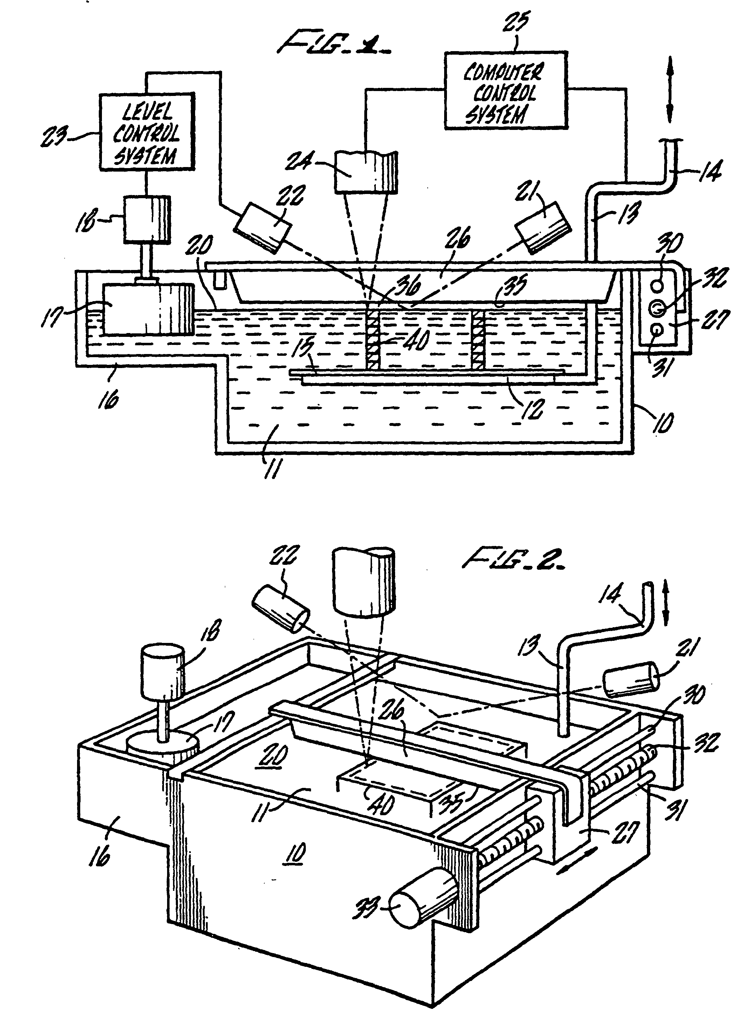

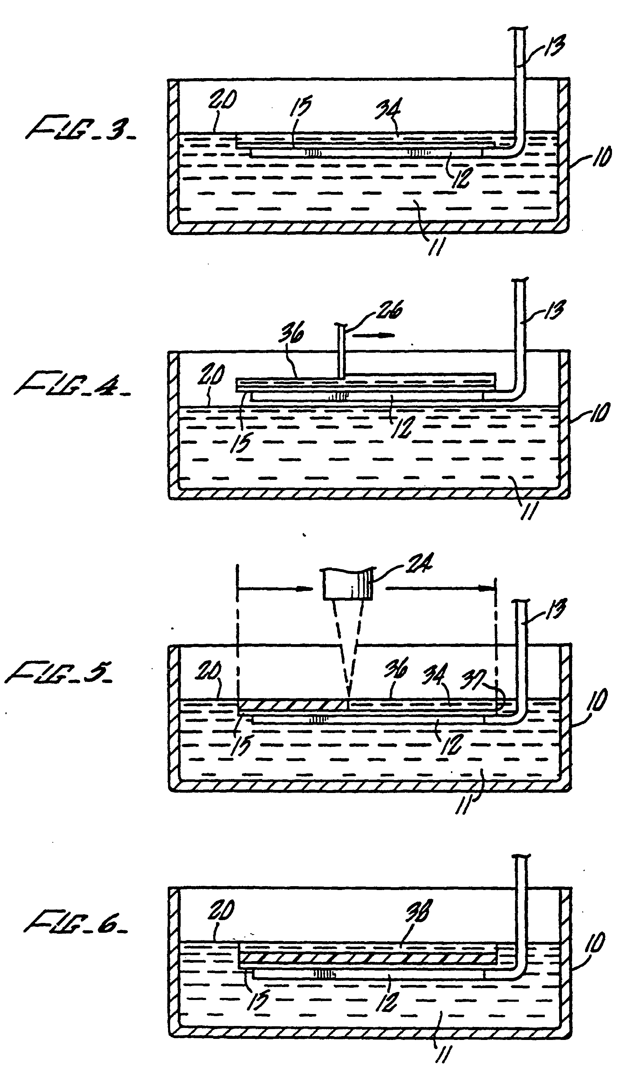

FIGS. 1 and 2 schematically illustrate the stereolithography system for forming three-dimensional objects which embodies features of the invention. As shown in these drawings, tank or vat 10 is provided to contain a bath 11 of polymerizable fluid. An object support platform 12 is disposed within the tank 10 and is adapted by frame elements 13 and 14 to be raised and lowered within the tank by a motor (not shown). The platform 12 has a horizontal surface 15 on which the three-dimensional objects are formed in accordance with the invention. The tank 10 has a trough 16 in the upper portion of one sidewall of tank 10 and a plunger or piston 17 is disposed within the trough to be raised and lowered By motor 18 to control the level of the upper surface 20 of polymerizable liquid within the tank 10.

The level of the upper surface 20 of the bath 11 is detected by means of a radiation source 21 such as an HeNe laser, which is directed toward the upper surface 20 at an angle and radiation sensor 22 which may be a bi-celled detector. The position of the sensor 22 is adjusted to be at a complementary angle with respect to the upper surface 20 so as to receive the radiation from the HeNe laser. A control system 23 is provided to control the movement of the plunger 17 by motor 18.

A computer controlled radiation source 24 is disposed above the bath 11 to direct curing media, such as ultraviolet radiation or other types of curing radiation, in a predetermined pattern across the upper surface 20 of the bath 11 in order to cure the polymerizable liquid in the layer above the platform where such radiation impacts thereon. The movement and operation of the radiation source 24 and raising and lowering of the object support platform 12 are integral parts of the computer control 25 of the system as will be further described hereinafter.

A doctor blade 26 is mounted on the top of the tank 10 and is adapted to move horizontally across the top of the tank. A blade support 27 is slidably mounted on rails 30 and 31 disposed along one side of the tank 10. A threaded drive shaft 32 passes through a threaded passageway (not shown) in the blade support 27 and rotation thereof by motor 33 moves the blade support 27 and thus the blade 26 horizontally across the top of the tank 10.

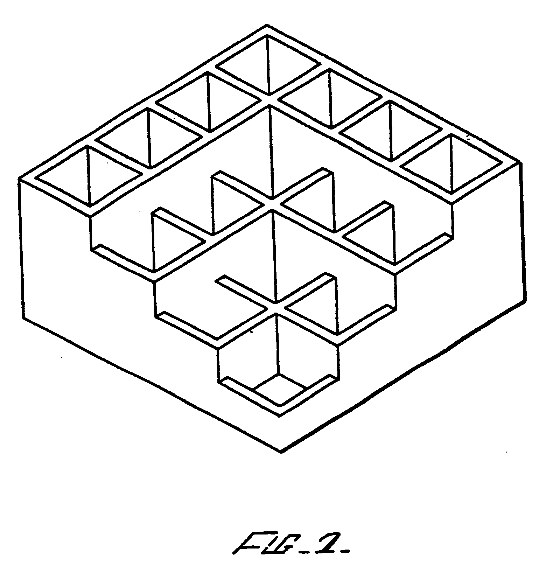

The operation of the stereolithography system shown in FIGS. 1 and 2 is best shown in the sequence of FIGS. 3-6. Starting with FIG. 3 the stereolithography procedure is initiated with the object support platform 12 being positioned within the bath 11 of polymerizable liquid so that the horizontal surface 15 thereon is located a short distance from the upper surface 20 of the bath. This distance is greater than the desired thickness of the layer of polymerizable liquid to be cured. The layer of polymerizable liquid immediately above the surface 15 will form the first solid layer of the three-dimensional object when cured.

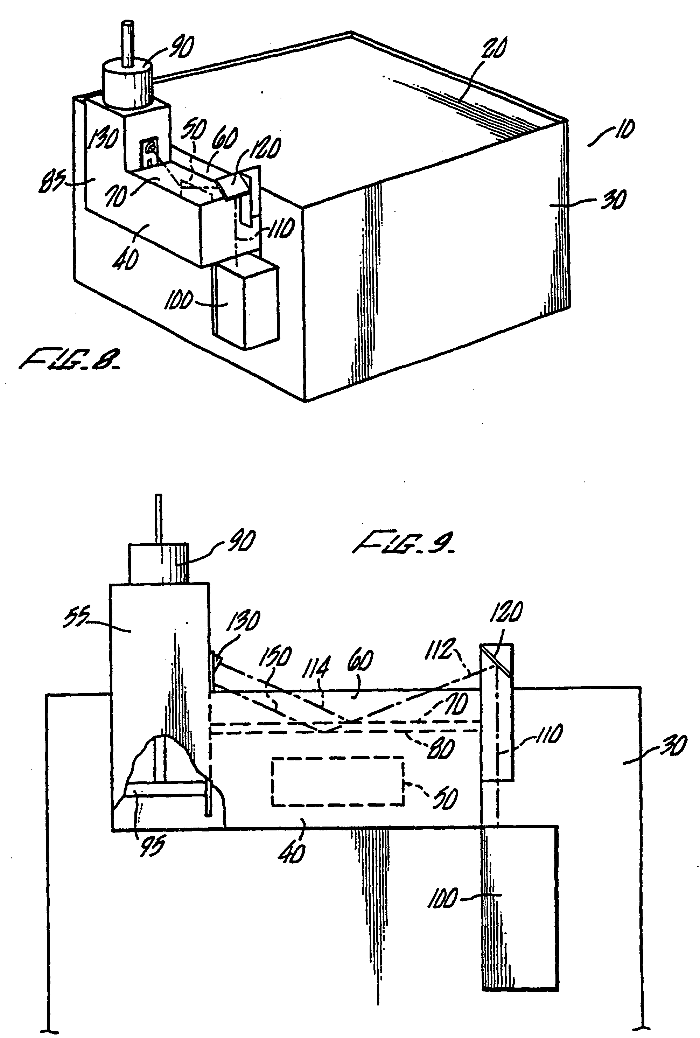

The next step in the process is shown in FIG. 4. The object support platform 12 is raised so that the layer 34 of polymerizable liquid on the surface 15 is held above the upper surface 20 of the bath 11. The polymerizable liquid is relatively viscous fluid so the liquid does not immediately run off the edges of the surface 15 on platform 12 when the layer is raised out of the bath. Doctor blade 26 is moved horizontally so that the lower edge 35 thereof strikes off excess polymerizable liquid from the layer 34 and thereby smooths the upper or working surface 36. Suitable blade speeds are empirically determined to provide a desired level to the working surface 36. Moreover, one or more passes by the doctor blade 26 may be needed at a particular speed to provide a smooth level surface 36. Typical blade speeds may range from about one to ten inches per second. When low viscosity polymerizable liquids are used, peripheral dams may be employed to contain the liquid until it is polymerized.

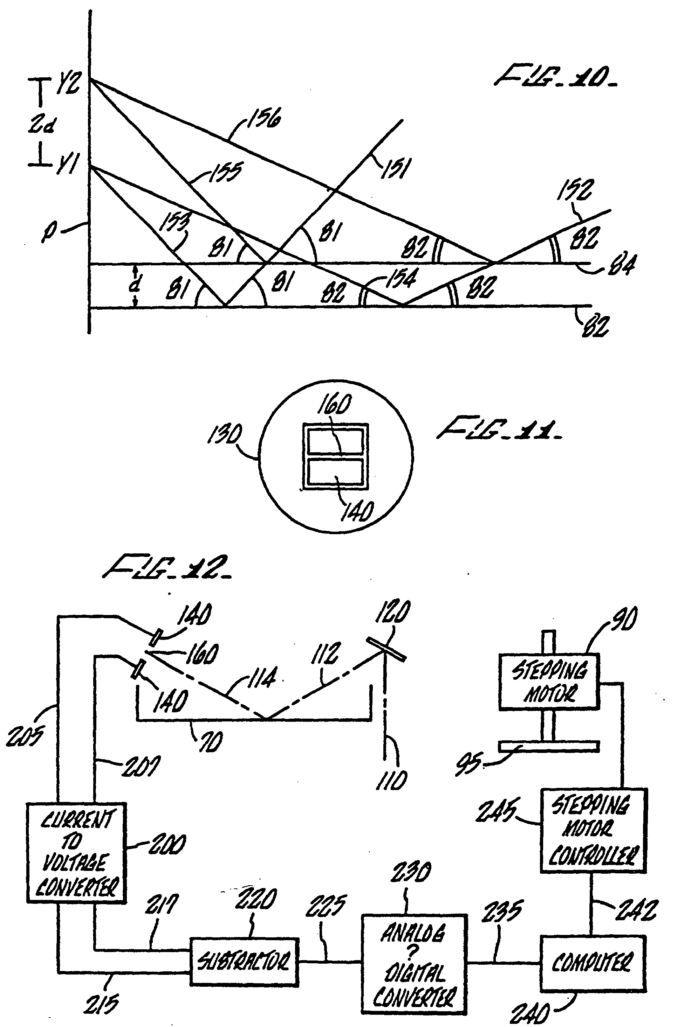

After the working surface 36 of layer 34 is leveled by the doctor blade 26, the object support platform 12 is lowered into the bath 11 as shown in FIG. 5 so that the smoothed working surface 36 of the layer 34 is level with or in the same horizontal plane as the upper surface 20 of the bath 11. The polymerizable fluid of the bath 11 which surrounds the layer 34 forms an interface 37 which is in essence a wall which supports the outer periphery of layer 36. Any disruptions of the working surface 36 or the upper surface 20 of the bath 11 caused by the submersion of object support platform 12 and the layer 34 into the bath 11 are relatively minor and quickly subside.

The computer controlled radiation source 24 is actuated after a short delay to eliminate any disruptions in the upper surface to direct curing media, preferably UV radiation or other suitable radiation, over the working surface 36 of the layer 34 in a predetermined pattern to cure the polymerizable liquid onto which the radiation impacts. The layer 34 is sufficiently cured so that it has the necessary green strength to support additional layers which are subsequently applied in a similar manner and to facilitate handling of the formed object after stereolithography but before final cure.

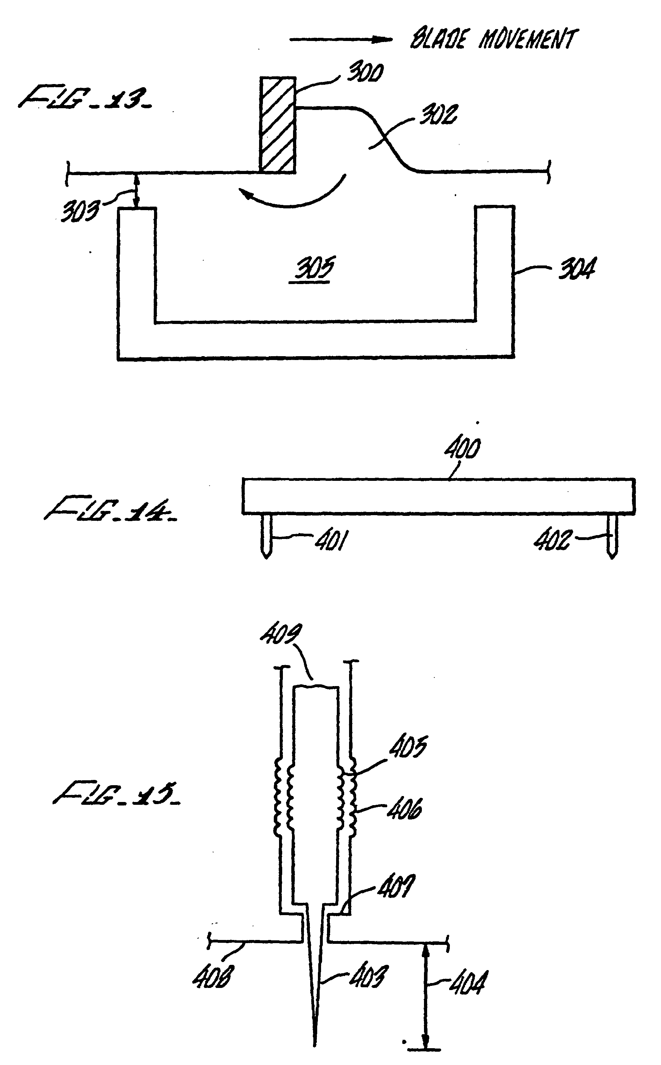

After irradiation of layer 34, the object support platform 12 is further lowered as shown in FIG. 6 so that the polymerizable liquid from the bath 11 flows over the previously cured layer 34 to form a new layer 38 to thereby initiate another cycle of the process.

A series of polymerized layers are built up in the aforesaid manner, as shown in FIG. 1, with each layer being in effect a thin cross section of the desired three-dimensional object 40. The thickness of the individual layers can vary depending upon the composition and viscosity of the polymerizable liquid and the nature and intensity of the curing radiation media. However, typical thicknesses range from about 0.127 mm to about 0.254 mm (about 0.005 to about 0.01 inch). The final three-dimensional object 40 which is formed by the afore-described stereolithography system is removed from the tank 10 and then subjected to further treatment to complete the curing of uncured material which remains within the bound surfaces of the three-dimensional object. Surface finishing, such as sanding and the like, may also be applied as needed.

A wide variety of polymerizable liquids can be utilized with the present invention as well as a wide range of curing media. However, photon polymerizable liquids, such as acrylics, are presently preferred along with UV radiation to cure them. Preferably, the viscosity of the polymerizable liquid should exceed 100 centipoise and preferably range from about 1000 to about 6000 centipoise.

### Example

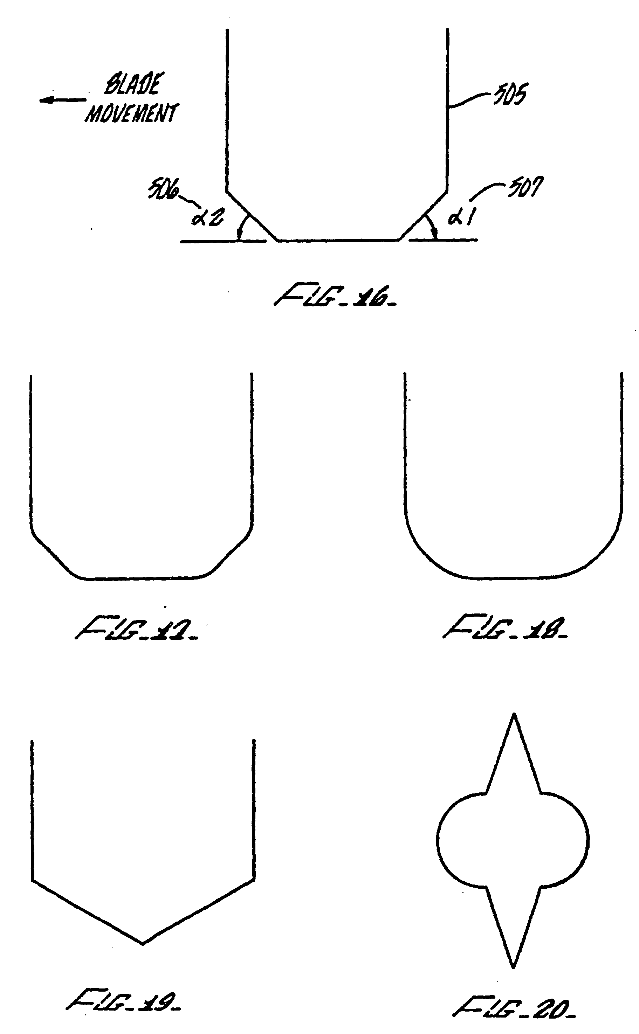

An example of a preferred embodiment of the present invention, a computer controlled stereolithography system developed by the present assignee and schematically shown in FIGS. 1 and 2 was utilized to form the three-dimensional object shown in FIG. 7. The base of the object was 21x21 cm (8.25 X 8.25 inches), the maximum height was approximately 4 inches and the minimum height was about 1 inch. The wall thicknesses were approximately 6.35 mm (0.25 inch). The polymerizable resin employed was a relatively viscous resin from Desoto Chemical Company identified as 4112-65 resin. The temperature of the bath thereof was maintained at approximately 30°C. The thickness of each layer applied was approximately 0.02 inch. The following procedures embodying the features of the present invention were followed for each layer applied. The object support platform of the stereolithography system was lowered into the bath of 4112-65 resin to allow the liquid resin to flow onto the surface thereon to form an initial layer of polymerizable liquid which was thicker than desired. The platform was then raised so that the initial layer thereon was raised above the bath. A blade traveling at approximately 1 inch per second struck off approximately 2,54 mm (0.1 inch) of polymerizable liquid in one pass, leaving about 0.508 mm (0.02 inch) of polymerizable liquid on the support surface on the platform. The platform was then lowered so that the smoothed working surface of the layer was level with the upper surface of the bath. The layer was subjected to ultraviolet radiation from an HeCd laser providing radiation at a wavelength of about 325 nanometers at about 15 milliwatts of power. The total time for each layer cycle was approximately 35 seconds. The time to make such a part with prior methods would have been approximately 165 seconds per layer cycle. The total time saved by utilizing the embodiments of the present invention in this example was approximately 7.5 hours.

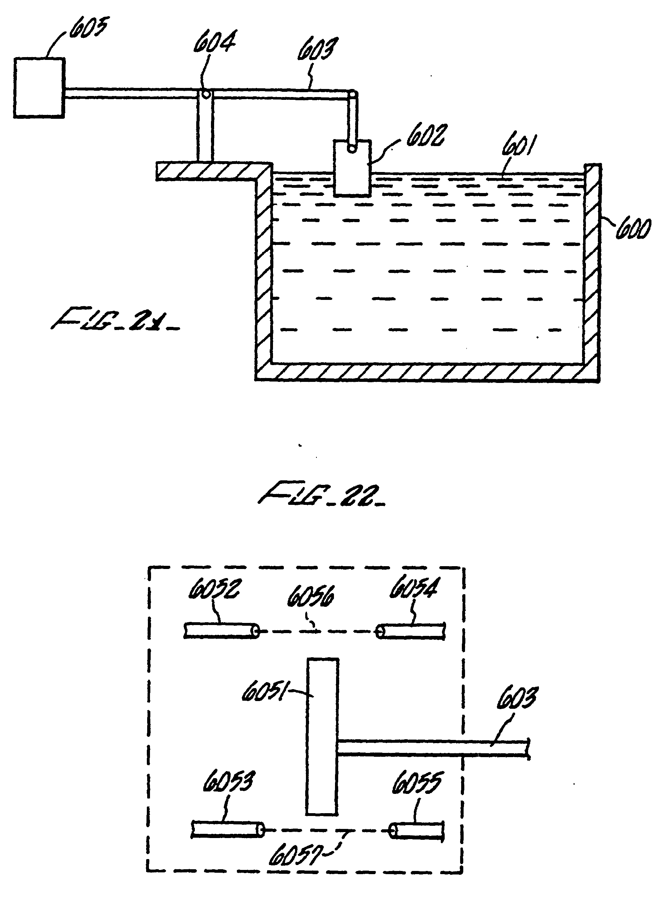

Referring now to Figure 8 in the drawings, an advantageous embodiment of the leveling aspect of the present invention is shown attached to a stereolithographic apparatus 10 in order to measure the level of the working fluid 20 (a U.V. curable photopolymer such as DeSoto #65) in resin vat 30. The stereolithographic apparatus depicted in Figure 8, apart from the addition of the preferred embodiment of the invention and related equipment, has the basic format shown in U.S. Patent No. 4,575,330 (earlier incorporated by reference) and found in the commercial stereolithographic apparatus sold by 3D Systems, Inc. under the acronym "SIA-1."

The stereolithographic apparatus 10 has a side tank 40 added to it which communicates with resin vat 30 by means of a passage 50 in wall 60 of the resin vat 30. The dimensions of the side tank are 17.78 mm (7 inches) by 10.16 mm (4 inches) in the preferred embodiment of the invention. The working fluid 20 fills the resin vat 30 and the side tank 40. The working fluid is free to flow from the side tank to the resin vat and vice versa. The level of the working fluid in the resin vat (and thus in the side tank) must be precisely controlled to a preset level in order to carry out stereolithographic production of parts (objects made by stereolithography are called "parts"). The apparatus of the present invention, in the form of the preferred embodiment shown, accomplishes this purpose.

A helium neon laser 100 is mounted on resin vat 30 below and to the side of the side tank 40. The laser is aligned so that its output beam is emitted straight up along the side tank. A Uniphase 1508 laser has been found to be successful in the preferred embodiment of the present invention. The Uniphase 1508 laser was chosen because of its low cost, compactness, and low power requirements. The light emitted from this laser will not polymerize the working fluid.

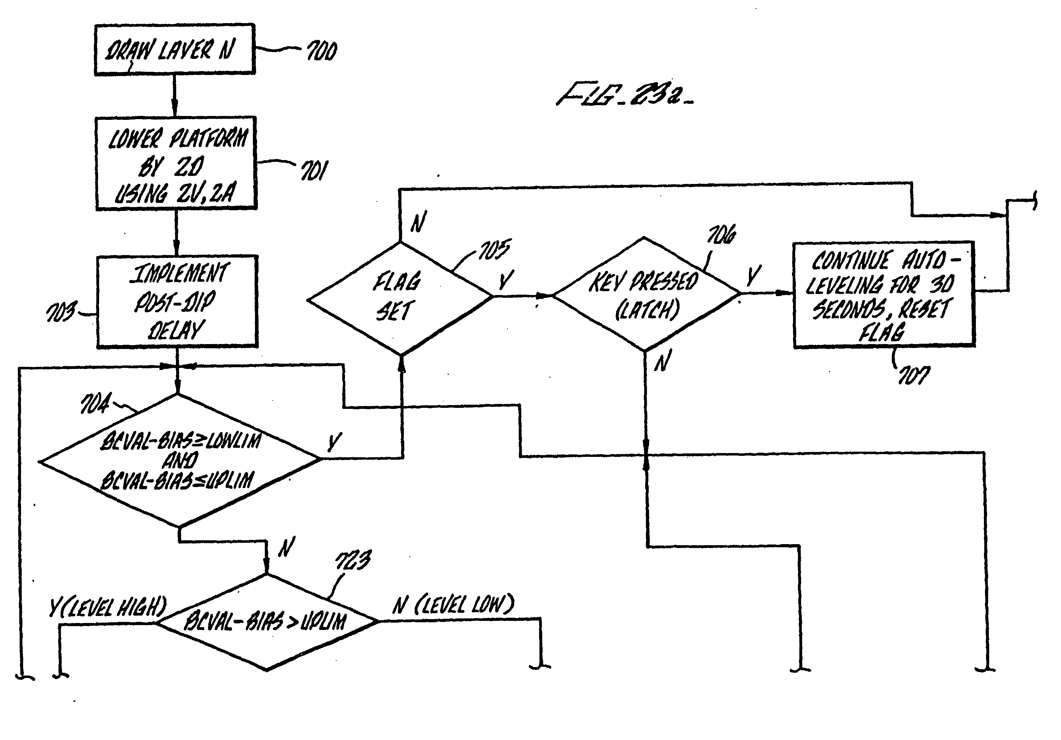

The output beam 110 of the helium neon laser is directed upwards to a mirror 120 (a Rolyn Optics #60.21) mounted on a bracket above the side tank. This deflects the beam along first optical path 112 onto the surface 70 of the working fluid in the side tank 40, as may be best seen in Figure 9. The beam strikes the surface of the working fluid at angle β with respect to the surface 70 (the angle of incidence equals 90° minus β). Angle β has a value at which a detectable component of the beam will be reflected along a second optical path 114. A varying range of angles will meet this latter requirement, depending upon the character of the fluid and the laser light, and the dimensions of the tank. In the preferred embodiment described here, this angle is 15°.

The apparatus described herein measures the level of the resin in the side tank as opposed to the vat. This is advantageous, since bubbles or other surface disruptions may form in the main vat as the part or support passes through the resin surface at each cycle of part building. These bubbles or other surface disruptions, if struck by the beam, could cause the beam to reflect from the resin surface at an erroneous angle. Other surface disruptions may form over the top of an immersed part that could cause an erroneous beam deflection, which disruptions could take a long time to level out. These include resin bulges, or areas where too much resin has been pushed off by the blade during recoating because of blade drag. These problems may be particularly acute in the case of certain part geometries having trapped volumes, or large, flat, horizontal surfaces, which geometries will be discussed in more detail farther on. By measuring the level of resin in a side tank, the above problems are minimized or eliminated.

After reflection from the surface 70 of the working fluid, the beam returns up along second optical path 114 at the same angle with respect to the surface of the fluid at which the beam impinged on the surface 70 of the fluid. The beam then shines on the bi-cell photo detector 130 mounted on plunger housing 85 on the other side of the side tank 40 from the mirror 120. The mirror is adjusted so that the beam impinges on the bi-cell detector 130 when the level of the working fluid is at the desired height. The mirror is not moved or turned once it has been adjusted to reflect the beam off the surface of the working fluid to the bi-cell photodetector when the level of the working fluid is at the desired height.

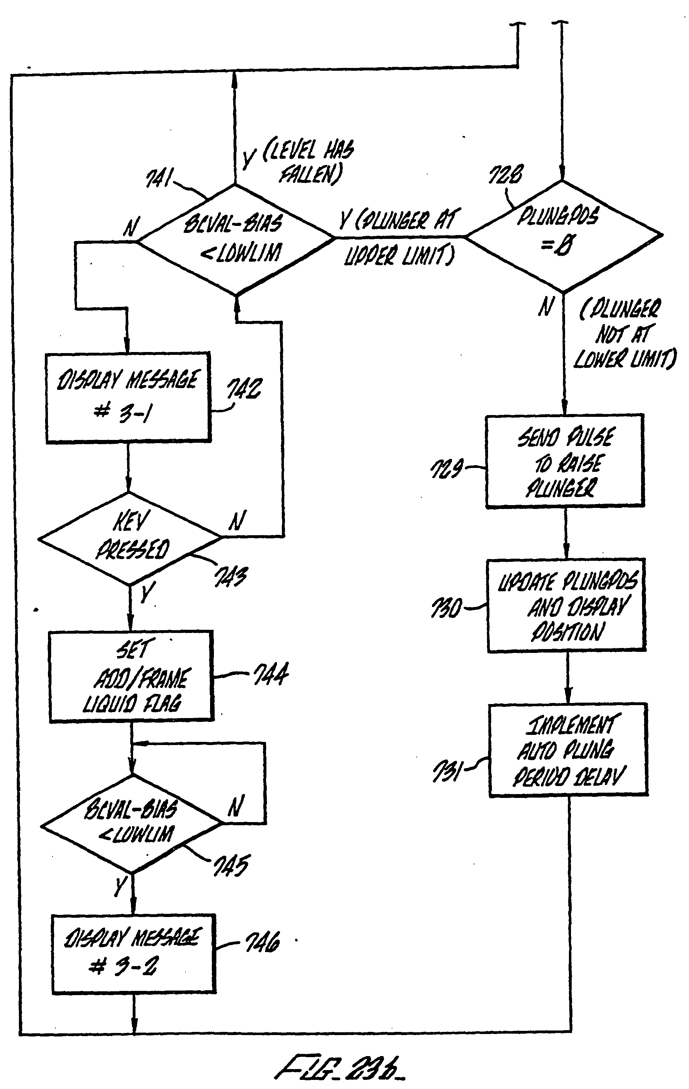

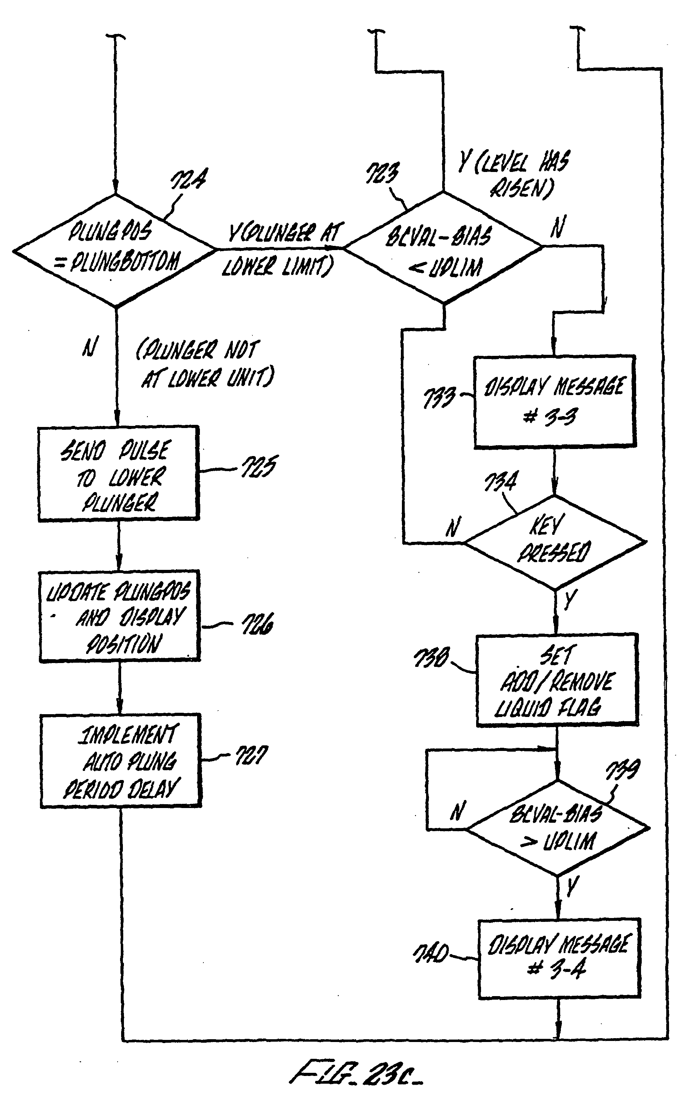

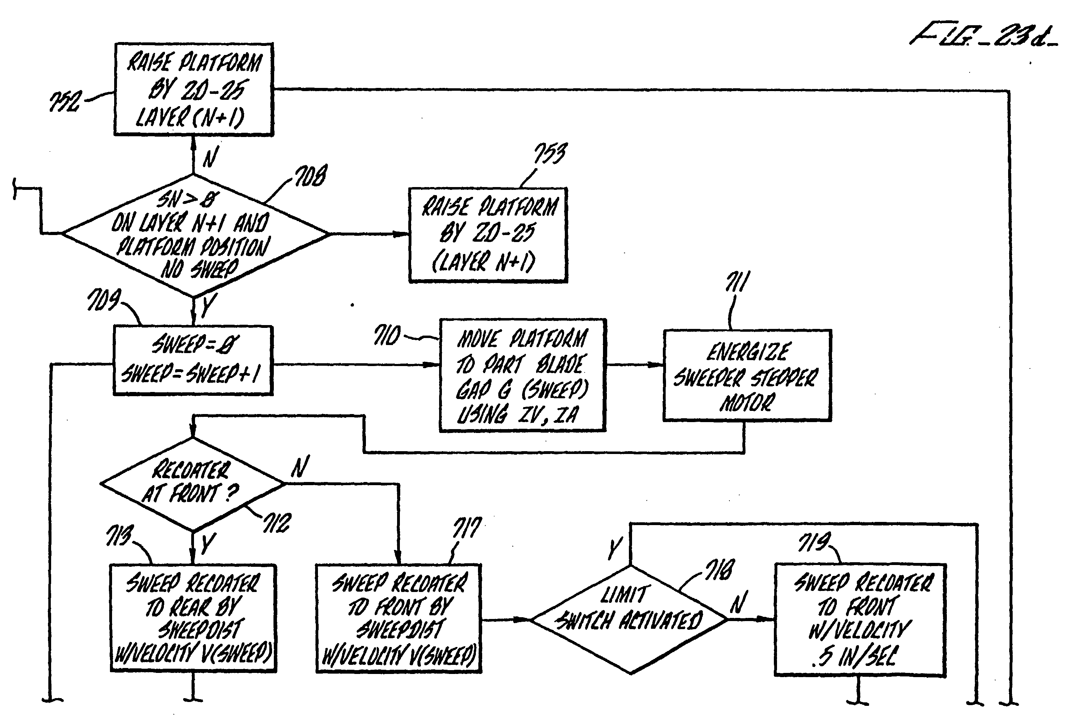

A satisfactory bi-cell photodetector, shown in Figure 11, is made by Silicon Detector Corporation and is known by their number SD113-24-21-021. Other brands and sizes of bi-cell photodetectors would be satisfactory. Linear position sensitive detectors ("PSD"), such as the Hamamatsu two-dimensional PSD (S1544) or two-dimensional lateral cell (S1B52) would be acceptable and might be preferable when the apparatus is intended to measure and display a quantity of output in terms of units of length. The bi-cell photodetector comprises two side-by-side photocells 140. The bi-cell photodetector 130 is mounted on the plunger housing 85 so that the photocells 140 are one above the other and both photocells are above the level of the working fluid. The photodetector may be inclined so that it intercepts second optical path 114 at a right angle, as is best seen in Figures 9 and 12. This ensures that the profile of the beam at the photodetector is a circle, not an oval, if the beam originally had a circular profile.

When the level of the fluid rises or falls due to shrinkage from curing, heating, and the like, the beam will strike the surface 70 at a different point. Accordingly, the beam will strike the bi-cell photodetector at a different point. This effect on the beam is shown in phantom in Figure 9, where a lower level 80 of the working fluid reflects the beam along second optical path 150 to impinge at a lower point with respect to the bi-cell photodetectors. The working fluid level change is exaggerated to illustrate this effect; the preferred embodiment of the invention measures the level of the working fluid in order to maintain that level at a predetermined height. Level changes are small because such level changes are quickly corrected as described below.

A given change in the level of the working fluid will cause the same displacement in the point at which the beam impinges on the bi-cell photodetector, regardless of the value of β. Figure 10 illustrates the result of a change in the working fluid level from level 82 to higher level 84. The difference between levels 82 and 84 is the vertical distance d. Two different beams are shown arriving along first optical paths 151 and 152, and meeting the surface of the fluid at angles β₁ and β₂, respectively. The second optical paths 153 and 154 (for the first level 82) are set to impinge on perpendicular P at the same point Y₁. When the level of the working fluid rises to level 84, the beams follow second optical paths 155 and 156, respectively. Simple trigonometric calculations reveal that both second optical paths 155 and 156 will meet perpendicular P at the same point Y₂ and that the vertical distance between Y₁ and Y₂ is twice the value of d, the vertical change in level of the working fluid. Accordingly, varying β will not affect the accuracy of the method of measuring the level of a fluid according to the invention. The value of β to be chosen depends mainly on which angle will obtain satisfactory reflection of the beam within the constraints of the apparatus.

The working fluid level change will result in a change in the electrical signal emitted by the bi-cell photodetector. The photocells 140 in the bi-cell photodetector are separated by slit 160 (see Figure 11) which is narrow, less than a mil thick. The output of both of the photocells will be equal when the bi-cell photodetector is not illuminated by the laser or when the laser beam is exactly centered on the slit 160 between the photocells 140. The outputs become unequal when the beam moves so that it impinges on one of the cells more than the other. Comparison of unequal outputs by a comparison circuit, as described below, will result in a signal being sent to the stepper motor 90 in order to drive plunger 95. The plunger 95 (see Figure 9) will go up or down as needed to maintain the level of the working fluid.

The plunger maintains the working fluid level at a substantially constant level in space. This is advantageous for it keeps the laser beam in focus. If the level were allowed to change, as would be the case for certain resin dispensing systems which dispose fresh resin into the vat at each cycle of part building, the laser would have to be refocused for the new level.

Referring now to Figure 12, the current outputs 205 and 207 of the photocells 140 are delivered to current to voltage converter 200 which converts the output of each photocell to a voltage between 0 and -2.5 volts. The two voltage outputs 215 and 217 of the current to voltage converter 200 (each photocell 140 has its own output) are supplied to subtractor 220, where the voltage outputs are subtracted. With the addition of a reference voltage (not shown) the difference between voltage outputs 215 and 217 is a signal 225 which ranges between 0 and +5 volts. When the fluid is at its desired level, signal 225 is at +2.5 volts.

Signal 225 is sent to analog/digital converter 230 where the signal is converted to digital signal 235, which then goes to computer 240. Computer 240 compares signal 235 to the predetermined digital signal for the desired fluid level and activates stepper motor controller 245. Stepper motor controller 245 in turn activates stepping motor 90 (a Minarik Electric Co. LAS 3802-001 stepper motor in the preferred embodiment) which moves plunger 95 up and down to displace fluid in order to return the fluid level to the desired value.

The computer is programmed to measure fluid level shortly after a first dipping operation, in which the part is dipped by moving the elevator deeper into the fluid, and before the elevator is raised back up to "draw" the next layer onto the part. The level of the working fluid is measured and controlled only at this specific time in the building process. The computer compares the signal 233 to the reference value at this specific time only and generates the signal 242 to the stepper motor controller 245 that determines how long and in which direction stepper motor controller 245 will activate stepper motor 90.

In an additional embodiment of the recoating apparatus of the subject invention, the ability to vary several parameters associated with the blade recoating process is provided, which parameters include the blade gap, which is the distance between the doctor blade and the surface of the resin bath in the vat, and the blade clearance, which is the distance between the blade and the top of the part. Typically, the blade clearance will be but may not be the same as the layer thickness of the next layer to be formed.

The optimal size of the blade gap depends on a balancing of several considerations. A large blade gap is problematic since it may lead to creases in the surface of the resin bath which will take time to level out. This is so because the blade gap determines the extent to which the top of the part must be raised above the resin surface for sweeping, and also determines the extent to which the top of the part must thereafter be lowered before curing of the next layer can begin. For a 3.175 mm (125 mil) blade gap, for example, and a desired blade clearance of 0.508 mm (20 mils), the top of the part must be raised 2.667 mm (105 mils) above the resin surface before sweeping can begin, and then must be lowered 3.175 mm (125 mils) before curing can begin so the top of the part will be 0.508 mm (20 mils) below the resin surface. The greater the movement of the top of the part, the more disruption that will be caused at the resin surface by the movement of the platform and supports, and the rest of the part, into and out of the liquid resin. This disruption is what is referred to above as a crease. These creases will typically form at the interface between the resin and the part.

A small blade gap is also problematic since the smaller the blade gap, the more resin the doctor blade typically must push out on a given sweep. For a 0 mil blade gap, for example, where the doctor blade is kept right at the surface of the bath, although the crease problem referred to above may be reduced, the doctor blade may be required to sweep resin off the entire vat surface. This may create a small tidal wave of resin, which may spill over the side of the vat, and which may "crash" and form bubbles on the resin surface.

It has been found that a blade gap of 25 mils provides a good compromise between the two problems referred to above. Typically, the blade gap will be set once before a part is built, and thereafter remain constant throughout part building.

Another parameter which is advantageous to vary is the blade clearance. Unlike the blade gap, however, it is desirable to be able to vary the blade clearance throughout part building instead of just once before part building.

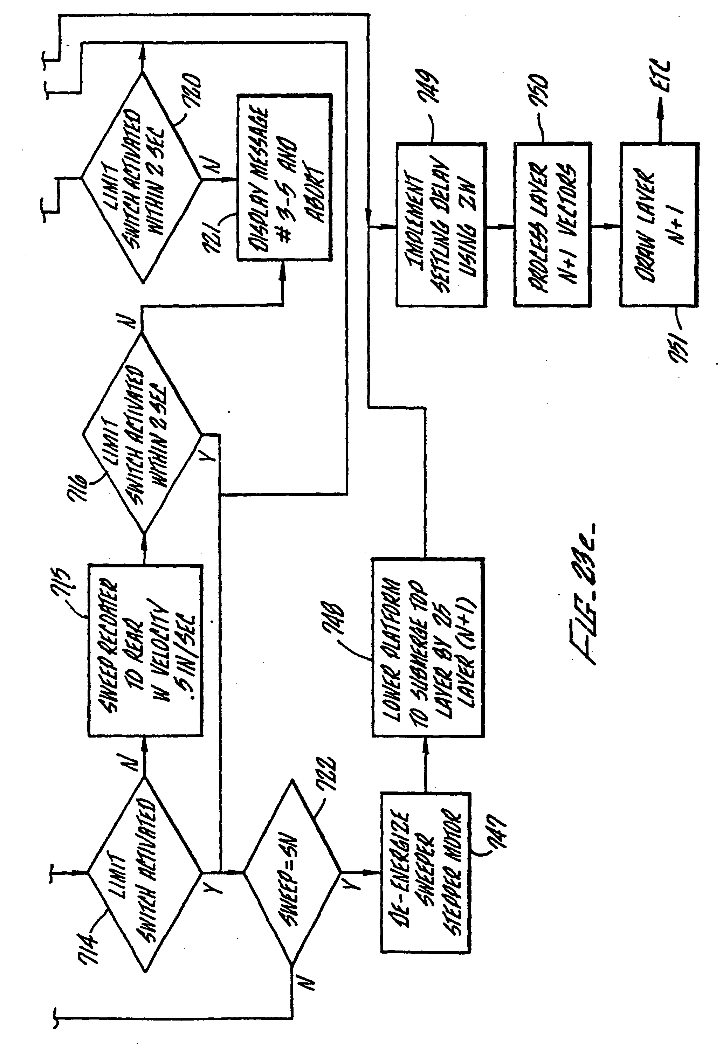

A variable blade clearance is advantageous, because it makes staged recoating possible. Staged recoating is where multiple sweeps of the blade are used for recoating a given layer, with a different blade clearance and possibly blade velocity at each sweep. Assuming a layer thickness of 0.508 mm (20 mils) for the next layer, for example, in a staged recoating process, the blade clearance for the first sweep might be 1.524 mm (60 mils), for the second 1.016 mm(40 mils), and for the third, 0.508 mm (20 mils). As a result, at each sweep, a smaller amount of resin will be swept away than if a single sweep were used to recoat, and a smaller bulge of resin will build up in front of the blade than if a single sweep were used to recoat. A large bulge building up in front of the blade is problematic when a trapped volume of resin is encountered by the blade. When a trapped volume is encountered, because of the force of gravity, a large bulge of resin may flow underneath the blade, and disrupt the desired layer thickness of the smooth layer forming in the wake of the blade. If the bulge were not allowed to build up in the first instance, then this problem could be made less severe. This problem can be illustrated with FIG. 13, which shows blade 300 in the middle of a sweep. Part 304 is lowered beneath the blade by distance 303, which is the blade clearance. Smooth resin surface 301 is formed in the wake of the blade, while a bulge of excess resin, identified by reference numeral 302, is formed in front of the blade. When the blade encounters a trapped volume of resin, identified with reference numeral 305, if bulge 302 is large enough, resin from the bulge may flow underneath the blade as indicated to disrupt the formation of smooth surface 301. This effect is less pronounced where the blade is travelling over a flat, horizontal surface of a part, since there is less room for the resin to flow underneath the blade.

Another parameter which can be varied is the speed of the blade, especially during staged sweeping, where a different speed can be specified for each sweep. It is advantageous to be able to tailor the blade speed to part geometry. When the blade is passing over a large, horizontal flat area of a part, if the blade is travelling too fast, too much resin may be swept away because of drag, which will induce resin below the blade to move at a particular velocity. If the blade is moving at 12.7 cm/sec (5 in/sec), for example, resin 0.025 mm (1 mil) below the blade may be induced to move at 10.16 cm/sec (4 in/sec), and resin below that may be induced to move at 7.62 cm/sec (3 in/sec). In some instances, drag may be so severe over flat areas, that all liquid resin is swept away by the blade. Therefore, over large flat areas, it may be desirable to slow the blade speed down so that the above problem does not occur.

On the other hand, over trapped volumes, if the blade is moved too slow, this may give the resin in the bulge more time to flow underneath the blade. Therefore, over trapped volumes, it may be desirable to increase the speed of the blade so that resin does not have time to flow underneath. The speed cannot be increased too much, however, since if it is increased too much, a wave of resin may be formed in front of the blade, which could crash and form bubbles.

Unfortunately, it is difficult to vary the speed of the blade dynamically depending on part geometry throughout part building. However, when a variable speed is provided for each sweep of staged recoating, the speed of the blade at each sweep and the number of sweeps can be chosen to minimize the above problems for a typical part. For example, it may be desirable for certain parts, where large flat areas and trapped volumes will be encountered, to use a large number of sweeps per layer, in the range of 5-10, with a relatively slow blade speed at each sweep. Because of the large number of sweeps, only a small amount of resin will be pushed away at each sweep, so that a bulge will not be able to build up and flow underneath the blade when a trapped volume is encountered. On the other hand, because of the slow blade speed, the problem of pushing away too much resin off of a large, flat, horizontal part surface will be minimized. This is because the blade will not be able to generate enough drag to sweep away all the resin. Moreover, the slow blade speed will not be a problem over trapped volumes since a large bulge will not be allowed to build up, so there will be little or no problem of resin flowing underneath the blade even with the slow blade speed.

It is also advantageous to be able to vary the extent to which the part is overdipped into the resin before sweeping begins. As described earlier, the part is typically immersed beneath the surface of the resin by more than the desired layer thickness of the next layer. For example, in a commercial embodiment of a SLA known as the SLA-250 manufactured by 3D Systems, the assignee of the subject invention, preferred layer thicknesses are ½ mm. or lower. In the SLA-250, the part is typically overdipped into the resin by 8 mm, which is many times a typical layer thickness. Therefore, it is desirable to be able to vary this parameter depending on layer thickness.

A typical recoating cycle comprises the following steps: 1) deep over-dipping of the part; 2) detecting and adjusting resin surface level; 3) up dipping; 4) sweeping; and 5) delaying so surface settles out. Overdipping by more than a layer thickness not only ensures that a bulge of resin will form on top of the part which can be smoothed out during sweeping, but it also ensures that surface disruptions which could interfere with resin level detection in step 2) level out faster. If the part were immersed close to the surface, any surface disruption which could form above the part would take longer to level out. This is because the "channel" between the top of the part and the resin surface would be smaller, and would restrict the movement of resin needed to smooth out disruptions. Therefore, because of overdipping by more than a layer thickness, level detection is correspondingly made more accurate. Moreover, if overdipping were limited to one layer thickness, then thin layer thicknesses of ½ mm (approximately 20 mils) or less would be less desirable. But, these layer thicknesses may be necessary to build certain parts with high resolution. Therefore, deep over-dipping also makes thin layers in this range easier to use.

In sum, in this embodiment, the ability to vary the blade gap, blade clearance, depth of overdipping, and blade speed, and the ability to use staged recoating, provide means to better tailor blade recoating to specific part geometries, so that specific problems associated with these geometries can be overcome.

In an additional embodiment, the blade design can be varied to make it even more efficient. In the SLA-250, the cross-section of the doctor blade is a square having a width of 3.17 mm (1/8 inch). In addition, the blade is supported at only one end with a support rail, which guides the movement of the blade so that the blade and its support resemble a cantilever. This may cause a problem known as flutter and twist, whereby the unsupported end of the blade twists and flutters, thereby leading to errors in the recoating process, such as nonuniform layer thickness. The extent to which the unsupported end will twist and flutter is proportional to the square of the blade length. An additional problem that may occur is the setting of the blade gap with this blade. This process involves many steps, each prone to error, and is also time-consuming. Moreover, it requires turning screws which can exert torque on, and therefore deflect the blade.

In a more recent commercial embodiment of a stereolithographic system known as the SLA-500, also developed by the 3D Systems, the blade has been redesigned from that used in the SLA-250.

First, to enable blade gap setting to be more easily accomplished, micrometer screws are provided at each end of the blade, which allow the height of each end of the blade above the resin surface to be independently adjusted to the known value within a tolerance of ½ mil without exerting torque on the blade.

In addition, threaded, retractable needles are provided, one at each end of the blade, each of which extends a known distance from the bottom of the blade, which distance is equal to the expected blade gap. At present, the needles extend 0.635 mm (25 mils) beyond the bottom of the blade. If a different blade gap were desired, needles which extended a different amount could be used.

The needles are illustrated in FIGs. 14 and 15. FIG. 14 shows blade 400 with needles 401 and 402 provided on either end. FIG. 15 shows a closeup of one of the needles which is mounted in the blade. As shown, the needle has an extended portion 403, which extends a distance 404 beyond the bottom 408 of the blade. In the SLA-500, the distance is 0.635 ± 0.013 mm (25 mils ± .5 mils). As shown, the needle has a threaded portion 405, which is preferably a micrometer thread, having 23.62 turns/cm (60 turns/inch).

The needle mount in the blade is identified with reference numeral 409. As shown, the mount has a threaded portion 406, into which the threaded portion of the needle can be threaded, and stops 407, for controlling the extent to which the needle can protrude beyond the bottom of the blade.

To set the blade gap, the needles are mounted by screwing them into the blade until they protrude the appropriate amount, and then the micrometer screw at one end of the blade is turned until the needle at that end touches the resin surface. This can easily be determined visually since the tip of the needle will form a large easily-observable meniscus with the resin surface when it comes within 0.0064-0.0128 mm (1/4-1/2 mil) of it. Thus, the needle can be placed at the surface within a tolerance of 0.0064-0.0128 mm (1/4-1/2 mil). Then, the micrometer screw at the other end of the blade is adjusted until the needle at that end touches the resin surface. Then, the blade is raised, and then lowered to see if both the needles touch the surface at the same time. If not, further iterations of the above cycle are made until they do. When they do, the blade gap is deemed set, and then the needles are unscrewed so they no longer protrude. They will remain in the mounts, however, so that the blade mass stays the same.

Other means for attaching the needles to the blade are possible, including the use of detent pins and release buttons similar to those used with a ratchet set.

To reduce twist and flutter of the blade, a second rail support is added so that each end of the rail is supported by such a rail. This will reduce or eliminate twist and flutter at the unsupported end of the blade.

Because of the double rail support, the blade can be made thicker for increased strength, and also to reduce flutter in the middle of the blade. A thicker blade may not be possible with just one support since the blade would sag more. At present, SLA-500 blades are available at widths of 0.0032 mm (1,8 in), 0.0048 mm (3/16 in), and 0.0064 mm (1/4 in).

Finally, as shown in FIG. 16, the blade cross section can be changed so it is no longer rectangular. First, the bottom of the blade can be constructed so that the non-horizontal edges of the blade near the bottom form angles, identified with reference numerals 506 and 507, known as the angles of attack and separation, respectively, with the resin surface. The angle of attack is the angle in the direction of blade movement while the angle of separation is the angle at the other end. These angles are added to better improve resin flow underneath the blade. Without these angles, turbulence could be generated underneath the blade, which could create bubbles. These bubbles are problematic since they may travel along with the blade underneath it and be left at the surface of the part after the blade has travelled over it. As a result, they may turn up as an imperfection in the part. By angling the edges of the blade, the pressure gradients are reduced underneath the blade, leading to less fluid separation and therefore less turbulence and less bubble formation. It has been found that, depending on part geometry, these angles can range between about 5 and 8 degrees, and in addition, the angle of attack can differ from the angle of separation. For the SLA-500, an angle of attack of 6 degrees is used.

The blade in FIG. 16 is shown as bisymmetric so that it can sweep in either direction. Alternatively, two asymmetric blades could be used alternatively to sweep in either direction with angles of attack in the direction of movement. Other blade configurations are possible.

FIG. 17 shows the blade of FIG. 16 where each vertex point is rounded. This may further reduce turbulence. FIG. 18 shows a version where the entire bottom is rounded. FIG: 19 shows a version where the bottom is a sharp vertex.

The levelling apparatus of the SLA-500 will now be described. This apparatus overcomes a problem which may occur with the bi-cell detector apparatus described earlier. As discussed earlier, the bi-cell apparatus may be sensitive to bubbles. To overcome this problem in that apparatus, a side tank is added in which bubbles are not formed, and the resin level is detected in the side vat. However, when a layer of resin is supported on a heavy immiscible fluid as described in U.S. Patent Application No. 365,444, the resin level in the side tank may not be an accurate determinate of the resin level in the main vat, as is assumed. This is because during part building, resin in the main vat may be used up disproportionally compared with the side tank. Because of this disproportionality, the liquid in the side tank, when viewed as a whole, may not be as dense as that in the main vat. This may cause the resin level in the side tank to falsely read too high.

To overcome this problem, an apparatus including a float is employed in the SLA-500 to detect the resin level in the main vat instead of the bi-cell apparatus described earlier. The float has the advantage that it is relatively insensitive to bubbles, and so can be used to detect the level of the resin in the main vat as opposed to a side tank. This is because a bubble which attaches to the side of the float will not change its mass, and hence the level at which it floats. Therefore, a side tank is not needed, and the float will accurately detect the resin level even if a layer of resin were floated on a heavy, immiscible fluid.

The float can take many shapes. For the SLA-500, the float is presently in the shape of a small can, having a volume of about 50 cc or more. In addition, the float is advantageously teflon coated, so that any resin that gets on the top, or wets the sides of the float, will rapidly drip or slide off, and not substantially change the mass of the float for an appreciable period of time.

If a bubble were able to lodge itself underneath the float, this could cause an erroneous level measurement since it could change the extent to which the float is submerged. In this instance, to combat this problem, other float designs are possible, as shown in FIG. 20, which would not enable bubbles to lodge underneath the float.

The float apparatus presently used in the SLA-500 is illustrated in FIG. 21. As illustrated, the apparatus comprises float 602, supporting beam 603, bearing 604, and optical detection circuitry 605. As shown, the supporting beam is coupled to the float, which floats on resin surface 601 placed in vat 600. The beam is also vertically rotatable around bearing 604. In the SLA-500, bearing 604 is advantageously a class 9 bearing.

The optical detection circuitry 605 is shown in detail in FIG. 22. As illustrated, the circuitry comprises member 6051 which is coupled to beam 603, light-emitting diodes ("LEDs") 6052 and 6053, which emit light beams 6056 and 6057, respectively, and optical detectors 6054 and 6055, which detect the uninterrupted presence of light beams 6056 and 6057, respectively. The optical detectors are electronically coupled to a plunger or other means (not shown) described earlier for raising or lowering the resin level in response to electrical signals from the optical detectors.

Any change in the level of the fluid will cause a corresponding vertical displacement of the float. This, in turn, will cause beam 603 to rotate around bearing 604, which will cause member 6051 to displace vertically by a distance which is a magnification of the fluid displacement.

As long as the member 6051, as shown, is situated between and does not block either of the two light beams, 6056 and 6057, the uninterrupted presence of which is detected by optical detectors 6054 and 6055, respectively, the resin level is assumed to be at the correct height. Only when member 6051 is deflected sufficiently to block the passage of one of the light beams to its corresponding optical detector, which will be detected by the failure of the optical detector to pick up any light from its corresponding LED, will it be assumed that the resin it at an incorrect level. In this instance, a plunger or other means electrically coupled to the optical detectors will be either raised or lowered in order to position the resin level, and hence float, at the correct height. If beam 6056 is blocked by the member, which will be detected by optical detector 6054, it will be assumed that the resin level is too low, in which case a plunger or the like could be lowered until the resin level is raised to the correct height. If beam 6057 is blocked by the member, which will be detected by optical detector 6055, it will be assumed that the resin level is too high, in which case a plunger or the like could be raised until the resin level is lowered to the correct height. Note that both of beams 6056 and 6057 cannot simultaneously be blocked by member 6051. Therefore, there will rarely, if ever, be an ambiguity with this apparatus, in the instance where the resin level is at an incorrect height, regarding whether the proper response thereto is to raise or lower the resin level.

The recoating software used in the SLA-250 will now be described. A specification for the software in the form of a flowchart is illustrated in FIG. 23. Before utilizing the software, a user must first specify certain parameters that will be used to control the movement of the platform. These parameters are ZA, ZV, ZW, and ZD. As described in more detail in U.S. Patent Application S.N. 331,644, the platform is under the control of a computer known as the PROCESS computer. ZA is the amount the PROCESS computer will allow the platform to accelerate or deaccelerate, ZV is the maximum velocity the platform will be allowed to achieve, and ZD is the depth the platform is caused to overdip into the liquid resin before sweeping. As discussed earlier, ZD is typically much greater than a layer thickness. ZW is the settling delay, which is the amount of time the PROCESS computer is directed to wait after the platform has been lowered after sweeping to place the upper surface of the resin layer on top of the part at the same level as the resin in the vat. The PROCESS computer will wait the amount of time specified by ZW before curing the resin on top of the part.

Besides these parameters, the user may specify other variables for each layer or range of layers including SN, which is the number of sweeps per layer, and GV, which stands for global velocity, and indicates that all sweeps are to be made at the specified velocity. The user also may specify V1-V7, which are individual velocities associated with sweeps 1-7, respectively. By setting these values, the user indicates he or she wishes velocity to vary by sweep.

The process begins in step 700, when layer N is drawn. Next, in step 701, the platform is lowered beneath the resin surface by ZD at a speed determined by ZA and ZV. In step 703, a post-dip delay is implemented to allow settling of the resin since the platform has just been moved.

In step 704, a reading from the bi-cell detector is taken and corrected for a bias introduced by the circuitry (identified as BCVAL-BIAS). The reading is then compared with an upper limit, identified as UPLIM, and a lower limit, identified as LOWLIM. If between these two values, the resin level is assumed to be at the correct height.

Assuming the level is at the correct height, in step 705, a flag is checked to see if set. The flag is set in response to a key pushed by the user, which indicates that the user manually has added or taken away resin from the vat. Assuming the flag is not set, in step 708, a check is made to determine that SN, the number of sweeps for layer N+1, is greater than 0, and that the platform is still in a safe position so that the blade will not strike it while sweeping. The upper bound for the platform position is identified by the mnemonic NOSWEEP.

Assuming these conditions are met, in step 709, an internal counter, SWEEP, is first initialized to 0, and then incremented. In step 712, a check is made to determine whether the blade is at the front or back of the vat. Assuming the front for the moment, in step 713, the blade is swept to the back of the vat (which is a distance specified by SWEEPDIST) at a velocity which may depend on the current value of SWEEP.

When the blade has reached the rear of the vat, it will in the usual instance trigger a switch identified with the mnemonic LIMIT SWITCH. Assuming the limit switch has been activated, in step 727, a check is made to determine whether all the sweeps specified by SN have been performed for the layer. Assuming they have not, a jump is made back to step 709, and the above cycle repeated.

Turning back to step 714, in the case where the limit switch has not been activated, the blade is slowly moved towards the rear at the velocity of 12.7 mm/sec (0.5 in/sec.), and assuming the limit switch is activated within 2 seconds, a jump is made to step 722. Assuming it is not so activated, the process is aborted in step 721.

Turning back to step 712, assuming the blade is at the back of the vat, in step 717, the blade is swept towards the front at a velocity which may be a function of the current sweep number, and in step 718, a check is made to see if the limit switch has been activated. Assuming it has, a jump is made to step 722. If it has not, in step 719, the blade is slowly moved towards the front at a velocity of 12.7 mm/sec (0.5 in/sec.), and if the limit switch is activated within 2 sec., a jump is made to step 722. If it is not, the process is aborted in step 721.

Turning back to step 704, which is right after the platform (and part) have been overdipped below the resin surface, if the resin level is not at the appropriate height, a check is made in step 723 to see if it is too high or too low. If BCVAL-BIAS is greater than UPLIM, the resin level is too low, and the plunger must then be lowered. In step 724, a check is made to see if the plunger is already at the bottom of the vat, and assuming it is not, in steps 725 and 726, the plunger is lowered, and the plunger position, identified with the mnemonic PLUNGPOS, is updated. In step 727, a delay is instituted to allow the resin to settle, and a jump is made to step 704 to check the resin level again. The above cycle then repeats.

Turning back to step 724, assuming the plunger is at the bottom of the vat, the only way to raise the level is to add resin to the vat. In step 732, the level is checked again, and assuming it is still too low, in steps 733-734, the user is asked to press a key indicating he or she will manually add resin. Until the key is pressed, the process will loop. When the key is pressed, a flag is set (the same flag which is checked in step 705). While the user presumably adds resin to the vat, in step 739, the process will loop until the resin level is at the current level. When it is, in step 740, a message is sent to the user indicating that enough resin has been added, and a jump is made to step 704.

Turning back to step 705, after the resin has been added so that the resin level is at the correct height, the flag must be reset. This condition is detected in steps 705 and 706, and in step 707, the flag is reset.

Turning back to step 723, in the case where BCVAL-BIAS is less than LOWLIM, indicating that the resin level is too high, the plunger must be raised. A check is made in step 728 to see if the plunger is already at its highest possible position, indicated by 0. Assuming it is not, in steps 729-730, the plunger is raised, and the plunger position, identified as PLUNGPOS, is updated. Then, in step 731, a settling delay is instituted, and a jump is made back to step 704.

Turning back to step 728, assuming the plunger is at its highest position already, and cannot be raised anymore, the user must be notified to remove some resin in the vat. In step 741, a check is made to determine that the resin level is still too high, and in steps 742-743, the user is sent a message, asking him or her to remove resin, and is asked to press a key acknowledging the message. Until the key is pressed, the process will loop. When the key is pressed, in step 744, a flag is set, and in step 745, while the user is removing resin, the resin level is checked until it is at the appropriate height. Until it is, the process will loop. When the level is at the correct height, in step 746, the user is notified to stop removing resin, and a jump made back to step 704. In steps 705-707, as discussed earlier, the flag is reset.

Note that levelling need not be performed at each layer, but only when the level may have changed because of any of the following: 1) thermal expansion; 2) shrinkage; and 3) changing displacement caused by platform supports. If neither of these are present, levelling need not be conducted for a layer.

Turning to step 749, when all the sweeps for layer N+1 have been performed, a settling delay equal to ZW will be instituted, and in steps 750-751, the vectors for layer N+1 are computed, and the layer drawn using these vectors in step 751. More detail on computing vectors and drawing layers is provided in U.S. Patent Application S.N. 331,644.

The above cycle is then repeated for all the rest of the layers of the part.

While the invention as described herein has been directed to specific embodiments, various modifications thereto can be employed. For example, while excess polymerizable liquid has been described herein as being struck off by a doctor blade, other means for such removal can obviously be employed, such as rakes and the like. As another example, a radiation source and sensor have been described herein as means to detect the level of the upper surface of the bath of polymerizable fluid, whereas a wide variety of mechanical, electronic, pneumatic, and other devices can be used to detect this level. For example, an apparatus using a float has been described. Other modifications and improvements can be used without departing from the scope of the invention as defined by the appended claims. Accordingly, it is not intended that the invention be limited, except by the appended claims.

## Claims

1. A method for forming a three-dimensional object by stereolithography, comprising:
containing a body of working fluid, said working fluid being polymerizable or capable of transforming its physical state upon application of a curing media or synergistic stimulation, respectively
measuring the surface level (70, 80) of said working fluid; and
applying a curing media or synergistic stimulation in a preselected pattern to successive layers at said surface of the working fluid to form a three-dimensional object;
**characterized in that**:
said curing media or synergistic stimulation is applied to a first region of said surface, which is separated from a second region of said surface by a wall (60), wherein said first region is in fluid communication with said second region of said surface by means of a passage (50), and wherein measuring of the surface level of said working fluid is performed at said second region of said surface.

2. The method according to claim 1, further **characterized in that** said passage (50) is located below the surface of said working fluid.

3. The method according to claim 1 or 2, wherein said wall (60) separates a side tank from a main tank, wherein measuring of the surface level of the working fluid is performed at the working fluid contained in the side tank.

4. The method according to any of the preceding claims, wherein the detected surface level of the working fluid is adjusted to a desired working level.

5. The method according to claim 4, wherein the surface level of the working fluid is maintained substantially constant.

6. The method according to any of the preceding claims, wherein measuring said surface level comprises the following steps:
generating a beam of electromagnetic radiation;
directing the beam of electromagnetic radiation along a first optical path (112) to the said second region of the surface (70, 80) of the working fluid so that a detectible portion of the beam is reflected from the surface along a second optical path (114; 150); and
sensing displacement of the second optical path at a distance perpendicular to the level (70, 80) of the fluid due to the changes of the level of the fluid.

7. A system for forming a three-dimensional object by stereolithography comprising:
means for containing a working fluid, said working fluid being polymerizable or capable of transforming its physical state upon application of a curing media or synergistic stimulation, respectively;
means for measuring the surface level (70, 80) of said working fluid;
and
means for applying a curing media or synergistic stimulation in a preselected pattern to successive layers at said surface of the working fluid to form a three-dimensional object;
**characterized in that**:
said system further comprises a wall (60) separating a first region of said surface of the working fluid from a second region of said surface of the working fluid, said first region being in fluid communication with said second region of said surface by means of a passage (50),
wherein said means for applying a curing media or synergistic stimulation is arranged to apply said curing media or synergistic stimulation to said first region of said surface and wherein the means for measuring of the surface level of said working fluid are arranged to perform said measurement at said second region of said surface.

8. The system according to claim 7, further **characterized in that** said passage (50) is located below the surface of said working fluid.

9. The system according to claim 7 or 8, wherein said wall (60) separates a side tank from a main tank, wherein measuring of the surface level of the working fluid is performed at the working fluid contained in the side tank.

10. The system according to any of the claims 7 - 9, further comprising means for adjusting the detected surface level of the working fluid to a desired working level.

11. The system according to claim 10, wherein said desired working level is substantially constant.

12. The system according to any of claims 7 - 11, wherein the means for measuring said surface level comprise:
means for generating a beam of electromagnetic radiation;
means for directing the beam of electromagnetic radiation along a first optical path (112) to the said second region of the surface (70, 80) of the working fluid so that a detectible portion of the beam is reflected from the surface along a second optical path (114; 150); and
means for sensing displacement of the second optical path at a distance perpendicular to the level (70, 80) of the fluid due to the changes of the level of the fluid.

## Patentansprüche

1. Ein Verfahren zur Bildung eines dreidimensionalen Objektes durch Stereolithographie aufweisend:
Enthalten eines Körpers einer Arbeitsflüssigkeit, wobei die Arbeitsflüssigkeit polymerisierbar oder geeignet ist, ihren physikalischen Zustand über die Anwendung eines aushärtenden Mediums bzw. synergistischer Stimulation umzuwandeln;
Messen des Oberflächenniveaus (70, 80) der Arbeitsflüssigkeit; und
Anwenden eines aushärtenden Mediums oder synergistischer Stimulation in einem vorausgewählten Muster auf aufeinanderfolgende Schichten an der Oberfläche der Arbeitsflüssigkeit, um ein dreidimensionales Objekt zu bilden;
**dadurch gekennzeichnet, dass**
das aushärtende Medium oder die synergistische Stimulation auf eine erste Region der Oberfläche angewandt wird, die von einer zweiten Region der Oberfläche durch eine Wand (60) getrennt ist, wobei eine Flüssigkeitsverbindung zwischen der ersten Region und der zweiten Region der Oberfläche mittels eines Durchgangs (50) besteht und wobei das Messen des Oberflächenniveaus der Arbeitsflüssigkeit in der zweiten Region der Oberfläche ausgeführt wird.

2. Das Verfahren gemäß Anspruch 1, weiterhin **dadurch gekennzeichnet, dass** der Durchgang (50) unterhalb der Oberfläche der Arbeitsflüssigkeit angeordnet ist.

3. Das Verfahren gemäß Anspruch 1 oder 2, wobei die Wand (60) einen seitlichen Tank von einem Haupttank trennt, wobei das Messen des Oberflächenniveaus der Arbeitsflüssigkeit an der Arbeitsflüssigkeit ausgeführt wird, die in dem seitlichen Tank enthalten ist.

4. Das Verfahren gemäß einem der vorhergehenden Ansprüche, wobei das bestimmte Oberflächenniveau der Arbeitsflüssigkeit auf ein gewünschtes Arbeitsniveau eingestellt wird.

5. Das Verfahren gemäß Anspruch 4, wobei das Oberflächenniveau der Arbeitsflüssigkeit im Wesentlichen konstant gehalten wird.

6. Das Verfahren gemäß einem der vorangegangenen Ansprüche, wobei das Messen des Oberflächenniveaus die folgenden Schritte umfasst:
Erzeugen eines Strahls elektromagnetischer Strahlung;
Ausrichten des Strahls elektromagnetischer Strahlung entlang eines ersten optischen Weges (112) zu der zweiten Region der Oberfläche (70, 80) der Arbeitsflüssigkeit, so dass ein detektierbarer Bereich des Strahls von der Oberfläche entlang eines zweiten optischen Weges (114; 150) reflektiert wird; und
Erkennen der Versetzung des zweiten optischen Weges in einer Entfernung rechtwinklig zu dem Niveau (70, 80) der Flüssigkeit aufgrund der Änderungen des Niveaus der Flüssigkeit.

7. Ein System zur Bildung eines dreidimensionalen Objektes durch Stereolithographie aufweisend:
Mittel zum Aufnehmen einer Arbeitsflüssigkeit, wobei die Arbeitsflüssigkeit polymerisierbar oder geeignet ist, um ihren physikalischen Zustand über die Anwendung eines aushärtenden Mediums bzw. synergistischer Stimulation umzuwandeln;
Mittel zur Messung des Oberflächenniveaus (70, 80) der Arbeitsflüssigkeit;
und
Mittel zum Anwenden eines aushärtenden Mediums oder synergistischer Stimulation in einem vorausgewählten Muster auf aufeinanderfolgenden Schichten an der Oberfläche der Arbeitsflüssigkeit, um ein dreidimensionales Objekt zu bilden;
**dadurch gekennzeichnet, dass**:
das System weiter eine Wand (60) umfasst, die eine erste Region der Oberfläche der Arbeitsflüssigkeit von einer zweiten Region der Oberfläche der Arbeitsflüssigkeit trennt, wobei eine Flüssigkeitsverbindung zwischen der ersten Region und der zweiten Region der Oberfläche mittels eines Durchgangs (50) besteht,
wobei das Mittel zum Anwenden eines aushärtenden Mediums oder einer synergistischen Stimulation angeordnet ist, um das aushärtende Medium oder die synergistische Stimulation auf die erste Region der Oberfläche anzuwenden, und wobei die Mittel zur Messung des Oberflächenniveaus der Arbeitsflüssigkeit angeordnet sind, um diese Messung in der zweiten Region der Oberfläche auszuführen.

8. Das System gemäß Anspruch 7, weiterhin **dadurch gekennzeichnet, dass** der Durchgang (50) unterhalb der Oberfläche der Arbeitsflüssigkeit angeordnet ist.

9. Das System gemäß Anspruch 7 oder 8, wobei die Wand (60) einen seitlichen Tank von einem Haupttank trennt, wobei das Messen des Oberflächenniveaus der Arbeitsflüssigkeit an der Arbeitsflüssigkeit ausgeführt wird, die in dem seitlichen Tank enthalten ist.

10. Das System gemäß einem der Ansprüche 7 bis 9, weiter umfassend Mittel zum Einstellen des detektierten Oberflächenniveaus der Arbeitsflüssigkeit auf ein gewünschtes Arbeitsniveau.

11. Das System gemäß Anspruch 10, wobei das gewünschte Arbeitsniveau im Wesentlichen konstant ist.

12. Das System gemäß einem der Ansprüche 7 bis 11, wobei die Mittel zum Messen des Oberflächenniveaus aufweisen:
Mittel zum Erzeugen eines Strahls elektromagnetischer Strahlung;
Mittel zum Ausrichten des Strahls elektromagnetischer Strahlung entlang eines ersten optischen Weges (112) zu der zweiten Region der Oberfläche (70, 80) der Arbeitsflüssigkeit, so dass ein detektierbarer Bereich des Strahls von der Oberfläche entlang eines zweiten optischen Weges (114, 150) reflektiert wird; und
Mittel zum Erkennen der Versetzung des zweiten optischen Weges in einer Entfernung rechtwinklig zu dem Niveau (70, 80) der Flüssigkeit aufgrund der Änderungen des Niveaus der Flüssigkeit.

## Revendications

1. Un procédé pour former un objet tridimensionnel par stéréolithographle, comprenant :
- le confinement d'une masse de fluide de travail, ce fluide de travail étant polymérisable ou capable de modifier son état physique sous l'effet de l'application, respectivement, d'un milieu de durcissement ou d'une stimulation synergique,
- la mesure du niveau de surface (70, 80) dudit fluide de travail, et
- l'application d'un milieu de durcissement ou d'une stimulation synergique selon un motif prédéterminé à des couches successives à l'endroit de ladite surface du fluide de travail pour former un objet tridimensionnel,
**caractérisé en ce que** :
ledit milieu de durcissement ou ladite stimulation synergique est appliqué à une première région de ladite surface, qui est séparée d'une seconde région de ladite surface par une paroi (60), où ladite première région est en communication de fluide avec ladite seconde région de ladite surface au moyen d'un passage (50), et où la mesure du niveau de surface dudit fluide de travail est effectuée à l'endroit de ladite seconde région de ladite surface.

2. Le procédé selon la revendication 1, **caractérisé en outre en ce que** ledit passage (50) est situé au dessous de la surface dudit fluide de travail.

3. Le procédé selon la revendication 1 ou 2, où ladite paroi (60) sépare un réservoir latéral d'un réservoir principal, où la mesure du niveau de surface du fluide de travail est effectuée à l'endroit du fluide de travail confiné dans le réservoir latéral.

4. Le procédé selon l'une des revendications précédentes, où le niveau de surface détecté du fluide de travail est ajusté à un niveau de travail souhaité.

5. Le procédé selon la revendication 4, où le niveau de surface du fluide de travail est maintenu substantiellement constant.

6. Le procédé selon l'une des revendications précédentes; où la mesure dudit niveau de surface comprend les étapes suivantes :
- production d'un faisceau de rayonnement électromagnétique,
- orientation du faisceau de rayonnement électromagnétique le long d'un premier chemin optique (112) vers ladite seconde région de la surface (70, 80) du fluide de travail de manière qu'une portion détectable du faisceau soit réfléchie depuis la surface le long d'un second chemin optique (114, 150), et
- détection du déplacement du second chemin optique à une certaine distance perpendiculairement au niveau (70, 80) du fluide à raison des modifications de niveau du fluide.

7. Un système pour former un objet tridimensionnel par stéréolithographie, comprenant :
- des moyens de confinement d'une masse de fluide de travail, ce fluide de travail étant polymérisable ou capable de modifier son état physique sous l'effet de l'application, respectivement, d'un milieu de durcissement ou d'une stimulation synergique,
- des moyens de mesure du niveau de surface (70, 80) dudit fluide de travail, et
- des moyens d'application d'un milieu de durcissement ou d'une stimulation synergique selon un motif prédéterminé à des couches successives à l'endroit de ladite surface du fluide de travail pour former un objet tridimensionnel,
**caractérisé et en ce que** :
ledit système comprend en outre une paroi (60) séparant une première région de ladite surface du fluide de travail d'une seconde région de ladite surface du fluide de travail, ladite première région étant en communication de fluide avec ladite seconde région de ladite surface au moyen d'un passage (50),
où lesdits moyens d'application d'un milieu de durcissement ou d'une stimulation synergique sont configurés pour appliquer ce milieu de durcissement ou cette stimulation synergique à ladite première région de ladite surface, et où les moyens de mesure du niveau de surface dudit fluide de travail sont configurés pour exécuter cette mesure à l'endroit de ladite seconde région de ladite surface.

8. Le système selon la revendication 7, **caractérisé en outre en ce que** ledit passage (50) est situé au-dessous de la surface dudit fluide de travail.

9. Le système selon la revendication 7 ou 8, où ladite paroi (60) sépare un réservoir latéral d'un réservoir principal, où la mesure du niveau de surface du fluide de travail est effectuée à l'endroit du fluide de travail confiné dans le réservoir latéral.

10. Le système selon l'une des revendications 7 à 9, comprenant en outre des moyens d'ajustement du niveau de surface détecté du fluide de travail à un niveau de travail souhaité.

11. Le système selon la revendication 10, où ledit niveau de travail souhaité est substantiellement constant.

12. Le système selon l'une des revendications 7 à 11, où les moyens de mesure dudit niveau de surface comprennent :
- des moyens de production d'un faisceau de rayonnement électromagnétique,
- des moyens d'orientation du faisceau de rayonnement électromagnétique le long d'un premier chemin optique (112) vers ladite seconde région de la surface (70, 80) du fluide de travail de manière qu'une portion détectable du faisceau soit réfléchie depuis la surface le long d'un second chemin optique (114, 150), et
- des moyens de détection du déplacement du second chemin optique à une certaine distance perpendiculairement au niveau (70, 80) du fluide à raison des modifications de niveau du fluide.
